(19) Europäisches Patentamt
European Patent Office
Office européen des brevets

(11) **EP 1 739 477 A1**

(12) **EUROPEAN PATENT APPLICATION**
published in accordance with Art. 158(3) EPC

(43) Date of publication:
**03.01.2007 Bulletin 2007/01**

(51) Int Cl.:
*G02F 1/167* *(2006.01)*      *G02F 1/17* *(2006.01)*
*G09F 9/37* *(2006.01)*

(21) Application number: **05727310.4**

(22) Date of filing: **31.03.2005**

(86) International application number:
**PCT/JP2005/006282**

(87) International publication number:
**WO 2005/098526 (20.10.2005 Gazette 2005/42)**

(84) Designated Contracting States:
**DE FR**

(30) Priority:  **05.04.2004  JP 2004110844**

(71) Applicant: **Bridgestone Corporation**
**Tokyo 104-8340 (JP)**

(72) Inventors:
• **KITA, Shinichi,**
**2-9-1, Matsumoto**
**Saitama 336-0035 (JP)**

• **TAMURA, Hajime**
**Kawasaki-shi,**
**Kanagawa 214-0014 (JP)**

(74) Representative: **Whalley, Kevin**
**Marks & Clerk**
**90 Long Acre**
**GB-London WC2E 9RA (GB)**

(54) **INFORMATION DISPLAY PANEL**

(57)    In an information display panel, in which display media (particles or liquid powders) are sealed between two substrates having paired electrodes, at least one substrate being transparent, and, in which the display media, to which an electrostatic field is applied, are made to move so as to display information such as an image, an electrode chipping portion is arranged to one of or both of the paired electrodes. Herewith, the information display panel, which can make a driving voltage low, is proposed.

FIG. 4

Printed by Jouve, 75001 PARIS (FR)

## Description

TECHNICAL FIELD

The present invention relates to an information display panel, in which particles or liquid powders are sealed between two substrates having paired electrodes, at least one substrate being transparent, and, in which the display media, to which an electrostatic field is applied, are made to move so as to display information such as an image.

BACKGROUND ART

As an information display device substitutable for liquid crystal display (LCD), information display devices with the use of technology such as an electrophoresis method, an electro-chromic method, a thermal method, dichroic-particles-rotary method are proposed.

As for these information display devices, it is conceivable as inexpensive visual display device of the next generation from a merit having wide field of vision close to normal printed matter, having smaller consumption with LCD, or having a memory function, and spreading out to a display for portable device and an electronic paper is expected. Recently, electrophoresis method is proposed that microencapsulate dispersion liquid made up with dispersion particles and coloration solution and dispose the liquid between faced substrates, and also it is expected.

However, in the electrophoresis method, there is a problem that a response rate is slow by the reason of viscosity resistance because the particles migrate among the electrophoresis solution. Further, there is a problem of lacking imaging repetition stability, because particles with high specific gravity of titanium oxide is scattered within solution of low specific gravity, it is easy to subside, difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252] However, the structure becomes complicated because the charge transport layer and further a charge generation layer are to be arranged. In addition, it is difficult to constantly dissipate charges from the electro-conductive particles, and thus there is a drawback on the lack of stability.

As one method for overcoming the various problems mentioned above, an information display device comprising an information display panel is known, in which the display media (particles or liquid powders) are sealed between a front substrate having a front electrode and a rear substrate having a rear electrode, and, in which the display media, to which an electrostatic field is applied, are made to move by means of Coulomb's force and so on so as to display information such as an image.

In the information display panel used for the information display device mentioned above, the display media charged in positive or negative are moved by means of an electrostatic field generated by applying a voltage to the electrodes. However, an electric imaging force or an adhesion force between the charged display media and the substrate, to which the electrode is provided, is generally applied to a portion of the substrate, to which the electrode is provided. Therefore, there is an drawback such that a driving voltage, which is a threshold for switching a display image, becomes high.

DISCLOSURE OF INVENTION

An object of the present invention is to eliminate the drawbacks mentioned above and to provide an information display panel, which can decrease a driving voltage.

According to the invention, an information display panel, in which particles or liquid powders are sealed between two substrates having paired electrodes, at least one substrate being transparent, and, in which the display media, to which an electrostatic field is applied, are made to move so as to display information such as an image, is characterized in that an electrode chipping portion is arranged to one of or both of the paired electrodes.

Moreover, as a preferred embodiment of the image display panel according to the invention, there are cases: (1) such that the electrode chipping portion is formed by a plurality of chipping portions each having a closed curve shape and has a size of 1% - 300% with respect to a projected area calculated from an average particle diameter of the particles constituting the display media; and such that, in the case that the electrode chipping portion is arranged to both of the electrodes, respective center positions of the electrode chipping portion arranged to one electrode and the electrode chipping portion arranged to the other electrode are not located at the same position in a projected plane. Further, there are cases: (2) such that the electrode chipping portion is formed by a plurality of chipping portions each having a straight line shape, and a width thereof is 1% - 150% of an average particle diameter d(0.5) of the particles constituting the display media; such that, in the case that the electrode chipping portion is arranged to both of the electrodes, an overlapped portion on a projected plane of the electrode chipping portion arranged to one electrode and the electrode chipping portion arranged to the other electrode is included in a circle calculated from an average particle diameter d(0.5) of the particles constituting the display media; and such that a sum of area Sk of the electrode chipping portion is 0.01<Sk/ S<0.8 with respect to an electrode area of a display portion.

In the present invention, since an edge portion is formed to an outline portion of the electrode chipping portion by arranging the electrode chipping portion to the electrode, an electrostatic field becomes high due to a concentration of electric flux lines at the edge portion. As a result, the particles or the liquid powders located near the edge portion are easy to move, and thus a low voltage driving can be achieved.

BRIEF DESCRIPTION OF DRAWINGS

[Fig. 1] Fig. 1 is a schematic view showing one embodiment of a driving method in an information display panel according to the invention.
[Fig. 2] Fig. 2 is a schematic view illustrating another embodiment of a driving method in an information display panel according to the invention.
[Fig. 3] Fig. 3 is a schematic view depicting one embodiment of an information display panel according to the invention.
[Fig. 4] Figs. 4a and 4b are schematic views respectively explaining one construction of an information display panel according to the invention.
[Fig. 5] Fig. 5 is a schematic view explaining one embodiment in which the present invention is applied to a simple passive matrix driving.
[Fig. 6] Fig. 6 is a schematic view explaining another embodiment in which the present invention is applied to a simple passive matrix driving.
[Fig. 7] Fig. 7 is a schematic view explaining still another embodiment in which the present invention is applied to a simple passive matrix driving.
[Fig. 8] Fig. 8 is a schematic view explaining still another embodiment in which the present invention is applied to a simple passive matrix driving.
[Fig. 9] Fig. 9 is a schematic view explaining still another embodiment in which the present invention is applied to a simple passive matrix driving.
[Fig. 10] Fig. 10 is a schematic view explaining one embodiment in which the present invention is applied to an active matrix driving
[Fig. 11] Fig. 11 is a schematic view explaining another embodiment in which the present invention is applied to an active matrix driving.
[Fig. 12] Fig. 12 is a schematic view explaining still another embodiment in which the present invention is applied to an active matrix driving.
[Fig. 13] Fig. 13 is a schematic view explaining still another embodiment in which the present invention is applied to an active matrix driving.
[Fig. 14] Fig. 14 is a schematic view explaining still another embodiment in which the present invention is applied to an active matrix driving.
[Fig. 15] Fig. 15 is a schematic view explaining still another embodiment in which the present invention is applied to an active matrix driving.
[Fig. 16] Fig. 16 is a schematic showing one embodiment of a shape of the partition walls in the information display panel used in the information display device according to the invention.

BEST MODE FOR CARRYING OUT THE INVENTION

At first, a basic construction of an information display panel used for an information display device utilizing the particles according to the invention will be explained. In the information display panel used in the present invention, an electrostatic field is applied to the particles sealed between opposed two substrates. Charged particles are attracted along a direction of electrostatic field to be applied by means of Coulomb's force in such a manner that the particles charged at a low potential are attracted toward a high potential side and the particles charged at a high potential are attracted toward a low potential side, and thus the particles can be moved reciprocally by varying a direction of electrostatic field due to a switching operation of potential. Accordingly, an image can be displayed. Therefore, it is necessary to design the information display panel in such a manner that the display media can move evenly and maintain stability during a reciprocal operation or during a reserving state. Here, as to forces applied to the particles, there are an attraction force between the particles due to Coulomb' force, an imaging force with respect to the electrode panel, an intermolecular force, a liquid bonding force and a gravity.

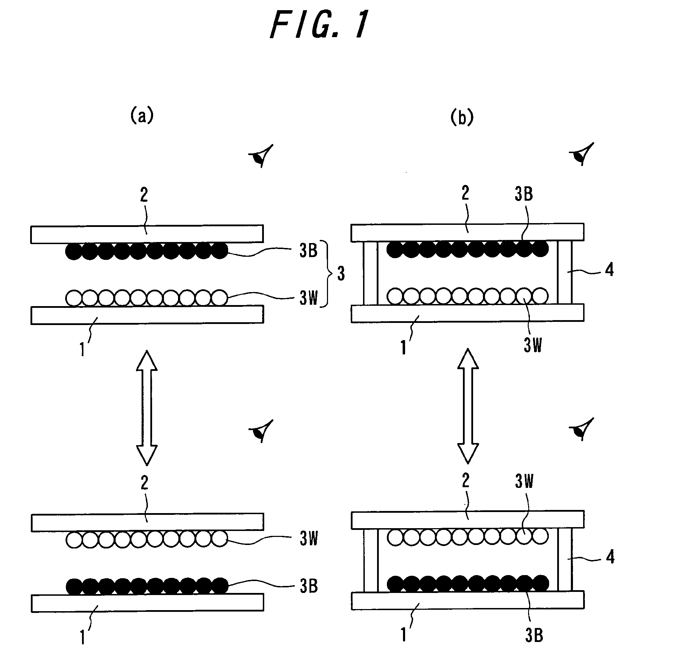

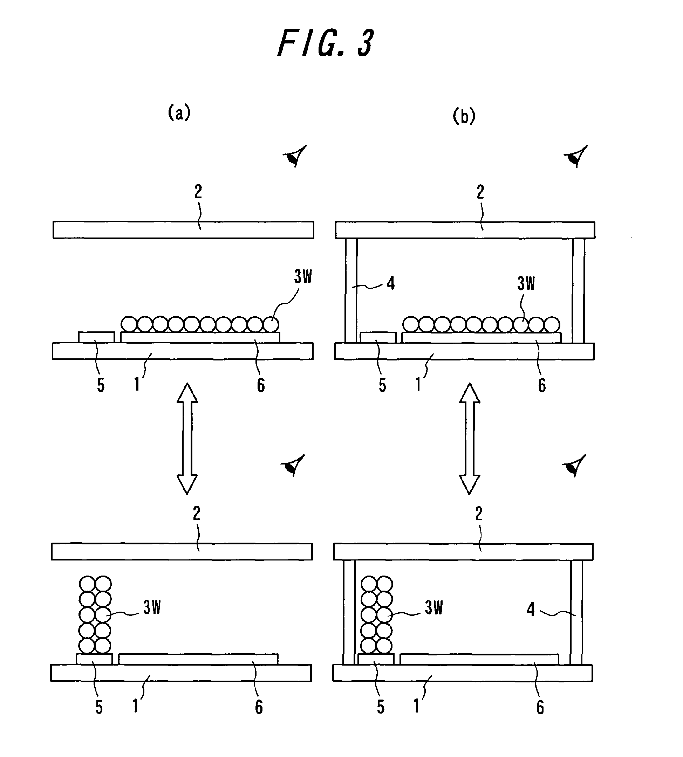

Examples of the information display panel according to the invention will be explained with reference to Figs. 1a and 1b - Figs. 3a and 3b.

In the examples shown in Figs. 1a and 1b, at least two or more groups of display media 3 having different colors and different charge characteristics and consisting of at least one or more groups of particles (here, a white color display media 3W made of the particles and a black color display media 3B made of the particles are shown) are moved in a perpendicular direction with respect to substrates 1 and 2, in accordance with an electric field applied outside of the substrates 1 and 2, so as to display a black color by viewing the black color display media 3B to an observer or so as to display a white color by viewing the white color display media 3W to the observer. In the example shown in Fig. 1b, a cell is formed by arranging for example grid-like partition walls 4 between the substrates 1 and 2, in addition to the example shown in Fig. 1a. Moreover, in Fig. 1b, the partition walls arranged at the near side are omitted.

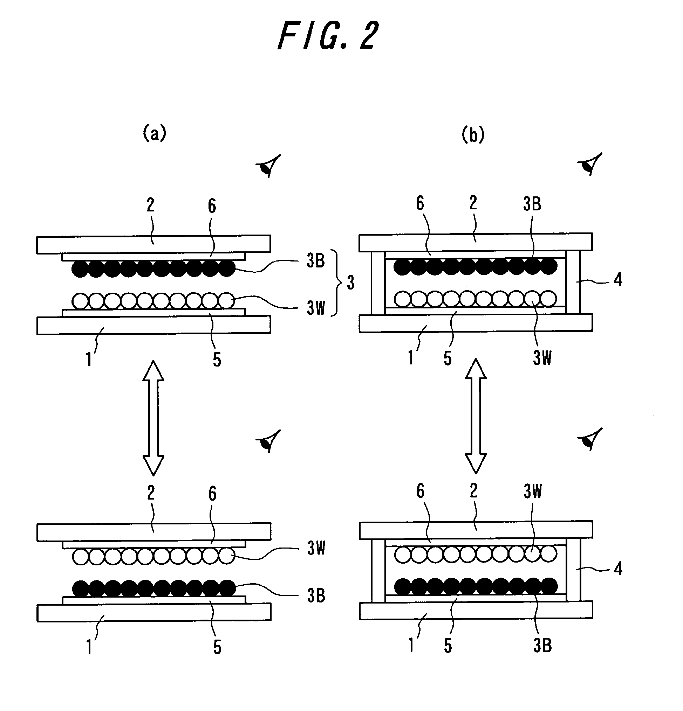

In the examples shown in Figs. 2a and 2b, at least two or more groups of display media 3 having different colors and different charge characteristics and consisting of at least one or more groups of particles (here, a white color display media 3W made of the particles and a black color display media 3B made of the particles are shown) are moved in a perpendicular direction with respect to substrates 1 and 2, in accordance with an electric field generated by applying a voltage between an electrode 5 arranged to the substrate 1 and an electrode 6 arranged to the substrate 2, so as to display a black color by viewing the black color display media 3B to an observer or so as to display a white color by viewing the white color display media 3W to the observer. In the example shown in Fig. 2b, a cell is formed by arranging for example grid-like partition walls 4 between the substrates 1 and 2, in addition to the example shown in Fig. 2a. Moreover, in Fig. 2b, the partition walls arranged at the near side are omitted.

In the examples shown in Figs. 3a and 3b, at least one group of display media 3 having one color and one charge characteristic and consisting of at least one or more groups of particles (here, a white color display media 3W made of the particles) are moved in a parallel direction with respect to substrates 1 and 2, in accordance with an electric field generated by applying a voltage between the electrode 5 arranged to the substrate 1 and the electrode 6 arranged to the substrate 1, so as to display a white color by viewing the white color display media 3W to an observer or so as to display a color of the electrode 6 or the substrate 1 by viewing a color of the electrode 6 or the substrate 1 to the observer. In the example shown in Fig. 3b, a cell is formed by arranging for example grid-like partition walls 4 between the substrates 1 and 2, in addition to the example shown in Fig. 3a. Moreover, in Fig. 3b, the partition walls arranged at the near side are omitted.

The above explanations can be applied to a case such that the white color display media 3W are substituted by white color display media made of liquid powders or a case such that the black color display media 3B are substituted by black color display media made of liquid powders.

A feature of the information display panel according to the invention is that an electrode chipping portion is applied to one of or both of the front substrate 6 and the rear substrate 5. Hereinafter, the feature of the information display panel according to the invention will be explained.

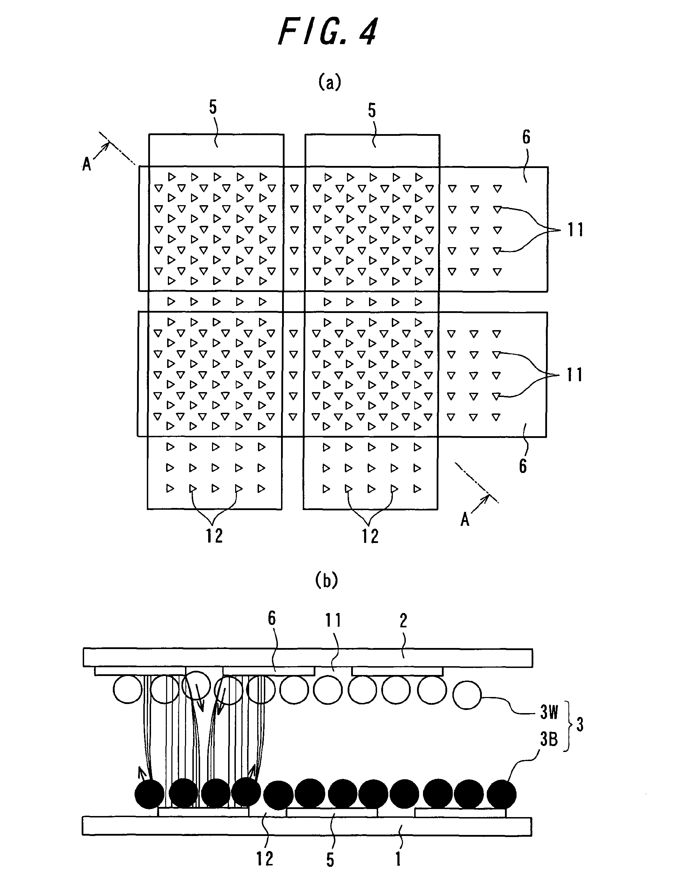

Figs. 4a and 4b are schematic views respectively explaining one embodiment of the information display panel according to the invention. In the embodiment shown in Fig. 4a, the substrates are not shown, and a relationship between the front electrode 6 arranged on the front substrate 2 at a display side and the rear electrode 5 arranged on the rear substrate 1 is maintained. In the embodiment shown in Fig. 4b, a portion of a cross section along A-A line in Fig. 4a is illustrated together with the front electrode 5 and the rear electrode 6 in addition to the front substrate 2 and the rear substrate 1. In the embodiments shown in Figs. 4a and 4b, as an example of a closed curve shape, a plurality of electrode chipping portions 11 each having a triangle shape are arranged to the front electrode 6, and a plurality of electrode chipping portions 12 each having a triangle shape are arranged to the rear electrode 5.

In the present invention, outline portions of the electrodes chipping portions 11 and 12 constitute an edge portion of the electrode, and electric flux lines are concentrated and generate a high electrostatic field at the edge portion of the electrode as shown in Fig. 4b by an arrow. Therefore, the display media 3 near the edge portion becomes easy to move. As a result, it is possible to perform a low voltage driving as compared with the known embodiment in which the electrode chipping portions 11 and 12 are not arranged to the electrodes 5 and 6.

In the present invention, a shape of the electrode chipping portions 11 and 12 each having a closed line shape is not particularly limited. Therefore, a circular shape and a polygonal shape may be used, and an aspect ratio (horizontal to vertical ratio) may be same aspect or may be different aspect. However, it is preferred to use a shape having a sharp angle (such as a triangle shape) so as to improve an edge effect. Moreover, as shown in Figs. 4a and 4b, both in the electrode chipping portion 11 and in the electrode chipping portion 12, the electrode chipping portions are not contacted with each other, and are aligned in the electrodes 5 and 6 by a certain repetition unit. Then, the electrodes 5 and 6, by which one display unit is selected, are continuously connected other than the electrode chipping portions 11 and 12 as a cell shape to be displayed. Further, as shown in Figs. 4a and 4b, respective center positions of the electrode chipping portion 11 arranged to the front electrode 6 on the front substrate 2 and the electrode chipping portion 12 arranged to the rear electrode 5 on the rear substrate 1 are provided in such a manner that they are not overlapped. In addition, in the embodiment mentioned above, the electrode chipping portion 11 and 12 are arranged to the front electrode 6 and the rear electrode 5 respectively, but the effect for decreasing the driving voltage can be obtained even when the electrode chipping portion is arranged only to one electrode.

In the present invention, if a size of one electrode chipping portions 11 and 12 is larger than an average particle diameter of the particles constituting the display media 3 and the display media 3 are located near the center of the electrode chipping portions 11 and 12, the edge effect is hardly influenced, and there is a tendency such that the effect is decreased. On the other hand, since the display media 3 arranged in the electrode chipping portions 11 and 21 is contacted to a surface of the substrates 1 and 2 having an insulation characteristic, an electric imaging force is not worked, and the display media 3 become further easy to move. Therefore, there is a tendency such that the driving voltage is remarkably decreased due to the effects mentioned above in addition to a high electrostatic field due to the edge effect. In the case that the display media 3 are once moved and are hit to the display media 3 on the other substrate, since a physical force is applied to the particles or the liquid powders 3 on the other substrate, a probability for driving even in a low electrostatic field is improved.

If a size of the electrode chipping portions 11 and 12 is thought about with taking into consideration of a relation between the electrode chipping portion and the display media, it is preferred to set the size of the electrode chipping portions 11 and 12 to 1% - 300%, more preferably 50% - 200%, with respect to a projected area calculated from an average particle diameter of the particles constituting the display media 3. Here, if it is less than 1%, a surface area of the substrate having an insulation characteristic becomes small, and the effect for decreasing an electric imaging force can hardly be obtained, so that a low driving voltage cannot be achieved. Further, if it exceeds 300%, the edge effect is hardly influenced to the display media located near the center of the electrode chipping portion and a strength of electrostatic field is weak, so that a low driving voltage cannot be also obtained. Moreover, it is preferred that a sum of area Sk of the electrode chipping portion is 0.01<Sk/S<0.8 with respect to an electrode area of a display portion. Here, if it is less than 0.01, the edge effect is hardly influenced to the display media located near the center of the electrode chipping portion and a strength of electrostatic field is weak, so that a low driving voltage cannot be obtained. Further, if it exceeds 0.8, the electrode chipping portions are come close with each other, and a width of the area, to which the electrode is formed, becomes narrow. Therefore, it is easy to break a line and thus an occurrence probability of display deterioration becomes high.

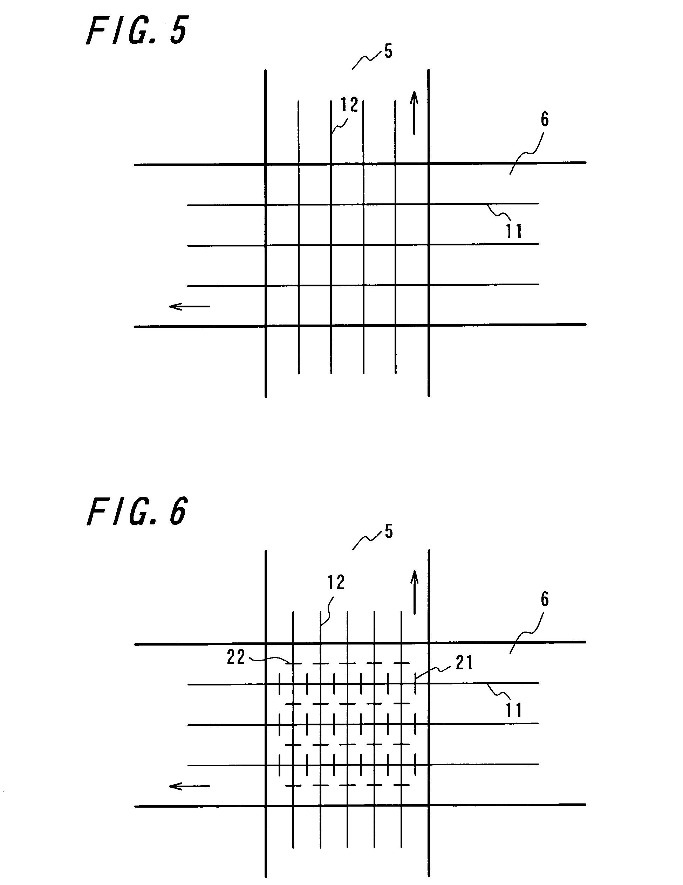

Fig. 5 - Fig. 9 are schematic views respectively explaining another embodiment of the information display panel according to the invention. Also in the embodiment shown in Fig. 5 - Fig. 9, the substrate is not illustrated, and the front electrode 6 arranged on the front substrate 2 at a display side and the rear electrode 5 arranged on the rear substrate 1 are shown in such a manner that a positional relation between the electrode 6 and the electrode 5 is maintained, as is the same as the embodiment shown in Fig. 4a.

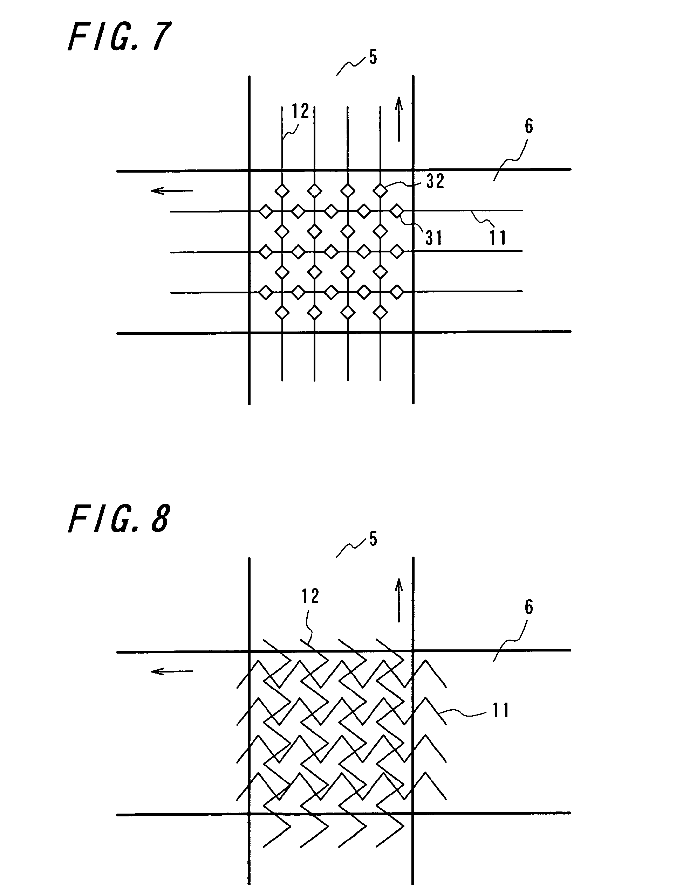

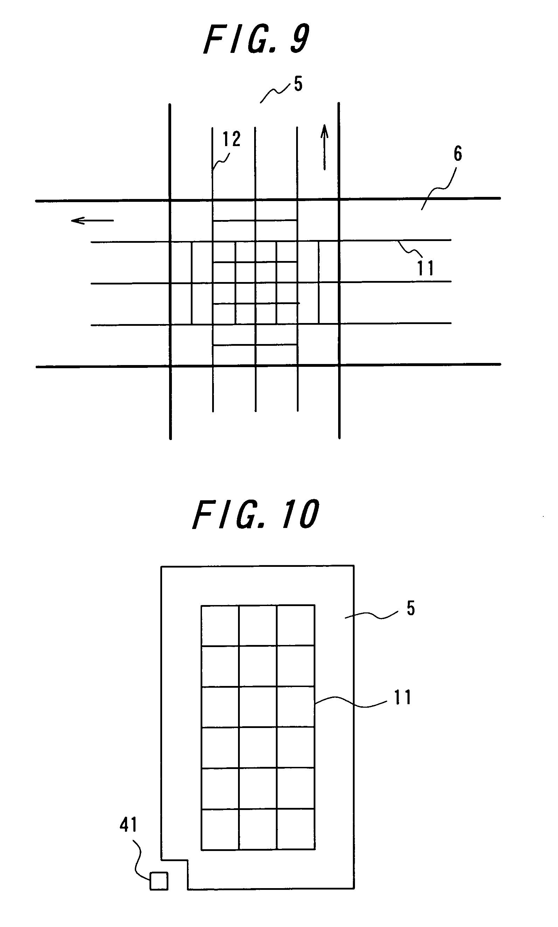

In the embodiment shown in Fig. 5, a plurality of electrode chipping portions 11 and 12 each having a straight line shape are arranged to the electrodes 5 and 6 in an orthogonal manner. In the embodiment shown in Fig. 6, a plurality of electrode chipping portions 11 and 12 each having a straight line shape are arranged to the electrodes 5 and 6 in an orthogonal manner, and a plurality of short ribs 21 and 22 are arranged in an orthogonal manner with respect to respective electrode chipping portions 11 and 12. In the embodiment shown in Fig. 7, a plurality of electrode chipping portions 11 and 12 each having a straight line shape are arranged to the electrodes 5 and 6 in an orthogonal manner, and chipping portions 31 and 32 each having a rectangular shape are arranged to respective electrode chipping portions 11 and 12 each having a straight line shape in such a manner that the center positions of the chipping portions 31 and 32 are not located at a same position on a projected plane. In the embodiment shown in Fig. 8, a plurality of electrode chipping portions 11 and 12 each having a straight line shape are arranged to the electrodes 5 and 6 in an orthogonal manner, and they are arranged in a zigzag manner. In the embodiment shown in Fig. 9, a plurality of electrode chipping portions 11 and 12 each having a straight line shape are arranged to the electrodes 5 and 6 in a ladder manner

In the embodiments shown in Fig. 5 - Fig. 9, it is preferred to set a width of the electrode chipping portions 11 and 12 each having a straight line shape to 1% - 150%, more preferably 50% - 120%, of an average particle diameter d(0.5) of the particles constituting the display media. Here, if it is less than 1%, a surface area of the substrate having an insulation characteristic becomes small, and the effect for decreasing an electric imaging force can hardly be obtained, so that a low driving voltage cannot be achieved. Further, if it exceeds 150%, the edge effect is hardly influenced to the display media located near the center of the electrode chipping portion and a strength of electrostatic field is weak, so that a low driving voltage cannot be also obtained. Moreover, in the case that the electrode chipping portion is arranged to both of the electrodes, it is preferred that an overlapped portion on a projected plane of the electrode chipping portion arranged to one electrode and the electrode chipping portion arranged to the other electrode is included in a circle calculated from an average particle diameter d(0.5) of the particles constituting the display media. In both cases, it is possible to perform the present invention more preferably.

As the present invention mentioned above, if the electrode chipping portions 11 and 12 are arranged to the electrodes 5 and 6, it is possible to make the driving voltage low not only in a simple passive matrix driving but also in an active matrix driving utilizing TFT.

Fig. 10 - Fig. 15 are schematic views respectively showing an embodiment in which the information display panel according to the invention is applied to the active matrix driving utilizing TFT. In the active matrix driving utilizing TFT, it is general to arrange the electrode chipping portion 11 only to one electrode and not to arrange the electrode chipping portion to the other electrode. Therefore, in the embodiments shown in Fig. 10 - Fig. 15, only one electrode 5 is illustrated, but the electrode chipping portion may be arranged to the opposed electrode. Moreover, in the embodiments shown in Fig. 10 - Fig. 15, a numeral 41 shows an active element portion for TFT driving.

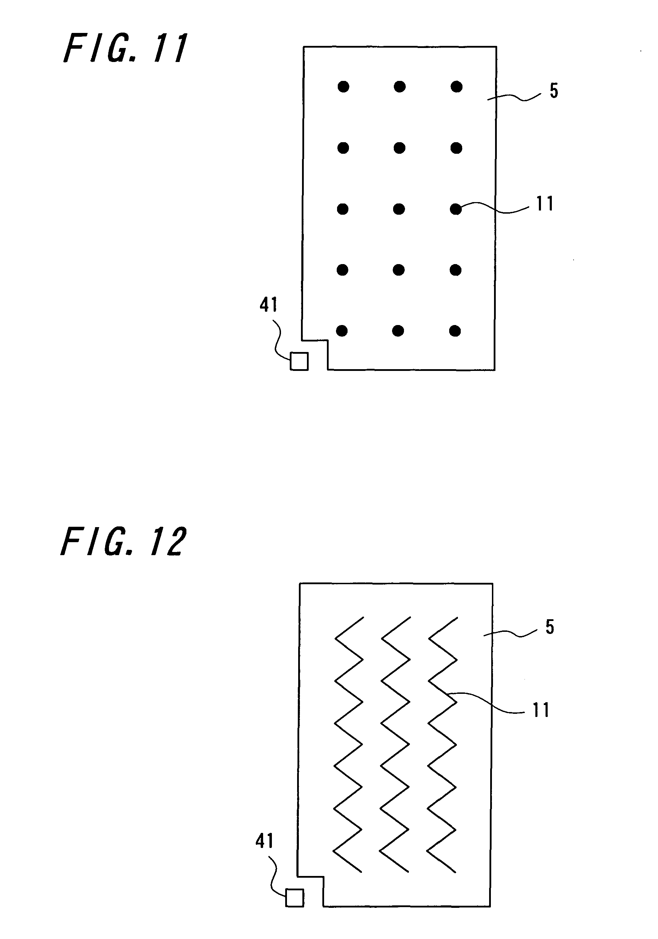

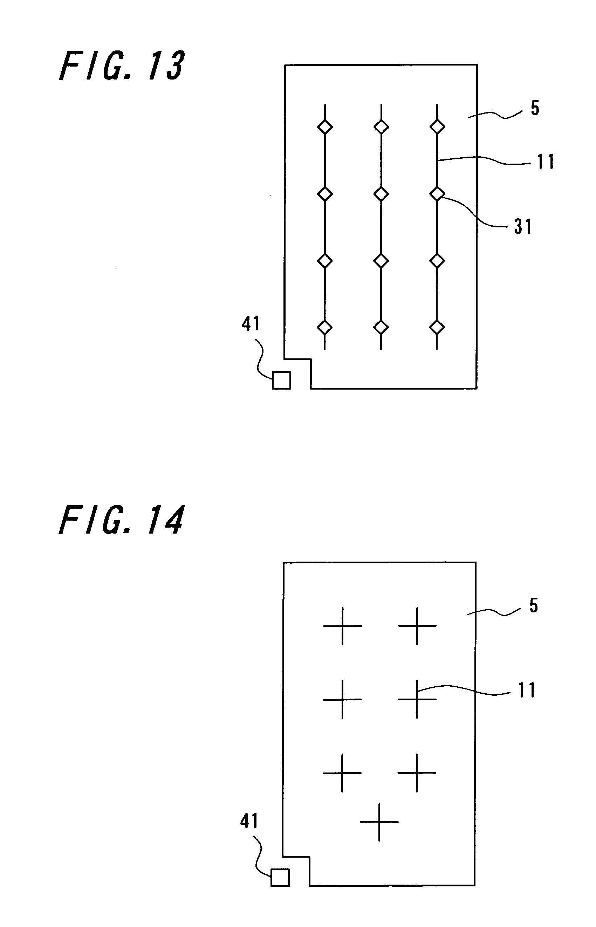

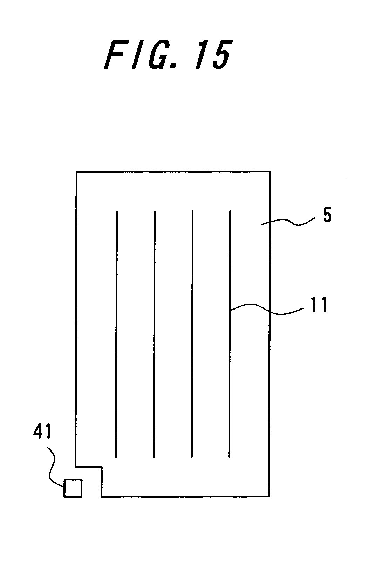

In the embodiment shown in Fig. 10, the electrode chipping portion 11 having a straight line shape is arranged to the electrode 5 in a grid-like manner. In the embodiment shown in Fig. 11, the electrode chipping portion 11 having a dot shape is aligned and arranged to the electrode 5. In this embodiment, use may be made of a rectangular shape other than the dot shape. In the embodiment shown in Fig. 12, the electrode chipping portion 11 having a straight line shape is arranged to the electrode 5 in a zigzag manner. In the embodiment shown in Fig. 13, the electrode chipping portion 11 having a straight line shape is arranged to the electrode 5 in parallel, and a chipping portion 31 having a rectangular shape is arranged to the electrode chipping portion 11. In the embodiment shown in Fig. 14, a plurality of cross-like structures, in which the electrode chipping portion 11 having a straight line shape is arranged in an orthogonal manner, are arranged to the electrode 5. In the embodiment shown in Fig. 15, the electrode chipping portion 11 having a straight line shape is arranged parallel to the electrode 5 in a longitudinal direction. In this embodiment, the electrode chipping portion may be arranged parallel to the electrode in a lateral direction.

In the embodiments mentioned above, the explanation is made to the case such that the electrode chipping portions 11 and 12 arranged to the electrodes 5 and 6 are constructed by a through hole. However, a recess other than the through hole, which constructs the electrode chipping portions 11 and 12 arranged to the electrodes 5 and 6, may be applied in the present invention.

Hereinafter, respective members constituting the information display panel according to the invention will be explained.

As the substrate, at least one of the substrates is the transparent front substrate 2 through which a color of the particles or the liquid powders can be observed from outside of the device, and it is preferred to use a material having a high transmission factor of visible light and an excellent heat resistance. The rear substrate 1 may be transparent or may be opaque. Examples of the substrate material include polymer sheets such as polyethylene terephthalate, polyether sulfone, polyethylene, polycarbonate, polyimide or acryl and metal sheets having flexibility and inorganic sheets such as glass, quartz or so having no flexibility. The thickness of the substrate is preferably 2 to 5000 $\mu$m, more preferably 5 to 2000 $\mu$m. When the thickness is too thin, it becomes difficult to maintain strength and distance uniformity between the substrates, and when the thickness is thicker than 5000 $\mu$m, there is a drawback as a thin-type information display panel.

As a material of the electrode in the case of arranging the electrode on the information display panel, use is made of metals such as aluminum, silver, nickel, copper, gold, or, conductive metal oxides such as ITO, indium oxide, conductive tin oxide, conductive zinc oxide and so on, or, conductive polymers such as polyaniline, polypyrrole, polythiophene and so on, and they are used by being suitably selected. As an electrode forming method, use is made of a method in which the materials mentioned above are made to a thin film by means of sputtering method, vacuum vapor deposition method, CVD (chemical vapor deposition) method, coating method and so on, or, a method in which conductive materials and solvents are mixed with synthetic resin binder and the mixture is sprayed. A transparency is necessary for the electrode arranged to the substrate at an observation side (display surface side), but it is not necessary to the substrate at a rear side. In both cases, the materials mentioned above, which are transparent and have a pattern formation capability, can be suitably used. Additionally, the thickness of the electrode may be suitable unless the electro-conductivity is absent or any hindrance exists in optical transparency, and it is preferable to be 3 to 1000 nm, more preferable to be 5 to 400 nm. The material and the thickness of the electrode arranged to the rear substrate are the same as those of the electrode arranged to the substrate at the display side, but transparency is not necessary. In this case, the applied outer voltage may be superimposed with a direct current or an alternate current.

As the partition wall 4 arranged according to need, a shape of the partition wall is suitably designed in accordance with a kind of the display media used for the display and is not restricted. However, it is preferred to set a width of the partition wall to 2 - 100 $\mu$m more preferably 3 - 50 $\mu$m and to set a height of the partition wall to 10 - 500 $\mu$m more preferably 10 - 200 $\mu$m. Moreover, as a method of forming the partition wall, use may be made of a double rib method wherein ribs are formed on the opposed substrates respectively and they are connected with each other and a single rib method wherein a rib is formed on one of the opposed substrates only. The present invention may be preferably applied to both methods mentioned above.

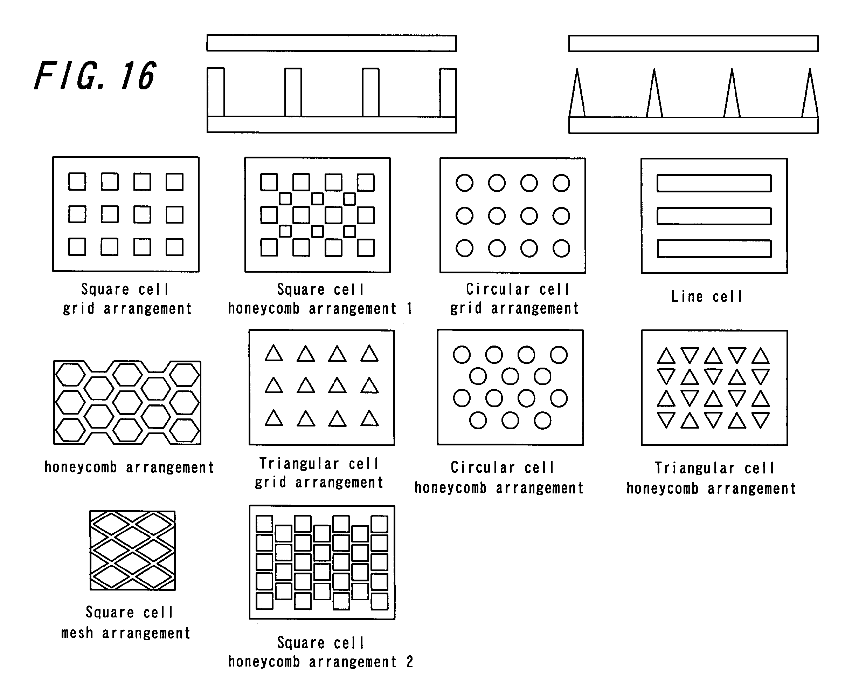

The cell formed by the partition walls each made of rib has a square shape, a triangular shape, a line shape, a circular shape and a hexagon shape, and has an arrangement such as a grid, a honeycomb and a mesh, as shown in Fig. 16 viewed from a plane surface of the substrate. It is preferred that the portion corresponding to a cross section of the partition wall observed from the display side (an area of the frame portion of the cell) should be made as small as possible. In this case, a clearness of the image display can be improved. The formation method of the partition wall is not particularly restricted, however, a die transfer method, a screen-printing method, a sandblast method, a photolithography method and an additive method. Among them, it is preferred to use a photolithography method using a resist film or a die transfer method.

Then, the particles as the display media used in the information display panel according to the invention will be explained. The particle constituting the particles may be composed of resins as a main ingredient, and can include according to need charge control agents, coloring agent, inorganic additives and so on as is the same as the known one. Hereinafter, typical examples of resin, charge control agent, coloring agent, additive and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds and colors of organic or inorganic pigments or dye as will be described below are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hansa yellow G, hansa yellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7, Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent.

Moreover, as the average particle diameter d(0.5) of the particles to be used, it is preferred to set d(0.5) to 0.1 - 20 $\mu$m and to use even particles. If the average particle diameter d(0.5) exceeds this range, the image clearness sometimes deteriorated, and, if the average particle diameter is smaller than this range, an agglutination force between the particles becomes too large and the movement of the particles is prevented.

Further, it is preferred that particle diameter distribution Span of the particles, which is defined by the following formula, is less 5 preferably less than 3:

$$\text{Span} = (d(0.9) - d(0.1))/d(0.5) \; ;$$

(here, d(0.5) means a value of the particle diameter expressed by $\mu$m wherein an amount of the particles having the particle diameter larger than or smaller than this value is 50%, d(0.1) means a value of the particle diameter expressed by $\mu$m

wherein an amount of the particles having the particle diameter smaller than this value is 10%, and d(0.9) means a value of the particle diameter expressed by $\mu$m

wherein an amount of the particles having the particle diameter smaller than this value is 90%).

If the particle diameter distribution Span of the particles is set to not more than 5, the particle diameter becomes even and it is possible to perform an even particle movement.

Furthermore, as a correlation between the particles, it is preferred to set a ratio of d(0.5) of the particles having smallest diameter with respect to d(0.5) of the particles having largest diameter to not more than 50 preferably not more than 10. The particles having different charge characteristics with each other are moved reversely, even if the particle diameter distribution Span is made smaller. Therefore, it is preferred that the particle sizes of the particles are made to be even with each other, and same amounts of the particles are easily moved in a reverse direction, and thus that is this range.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution. In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

A charge amount of the display media properly depends upon the measuring condition. However, it is understood that the charge amount of the display media used for the display media in the information display panel substantially depends upon an initial charge amount, a contact with respect to the partition wall, a contact with respect to the substrate, a charge decay due to an elapsed time, and specifically a saturation value of the particles for the display media during a charge behavior is a main factor.

After various investigations of the inventors, it is fond that an adequate range of the charged values of the particles for the display media can be estimated by performing a blow-off method utilizing the same carrier particles so as to measure the charge amount of the particles for the display media.

Then, the liquid powders used in the information display panel according to the invention will be explained. In the present invention, a term "liquid powders" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powders.

That is, as is the same as the definition of the liquid crystal (intermediate phase between a liquid and a solid), the liquid powders according to the invention are a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the information display panel according to the invention, a solid material is used as a dispersant.

The information display panel which is a target of the present invention has a construction such that the liquid powders composed of a solid material stably floating as a dispersoid in a gas and exhibiting a high fluidity in an aerosol state are sealed between opposed two substrates, wherein one of two substrates is transparent. Such liquid powders can be made to move easily and stably by means of Coulomb's force and so on generated by applying a low voltage. As mentioned above, the liquid powders means an intermediate material having both of liquid properties and particle properties and exhibiting a self-fluidity without utilizing gas force and liquid force. Such liquid powders become particularly an aerosol state. In the information panel according to the invention, the liquid powders used in a state such that a solid material is relatively and stably floating as a dispersoid in a gas.

As the aerosol state, it is preferred that an apparent volume in a maximum floating state is two times or more than that in none floating state, more preferably 2.5 times or more than that in none floating state, and most preferably three times or more than that in none floating state. In this case, an upper limit is not defined, but it is preferred that an apparent volume is 12 times or smaller than that in none floating state.

If the apparent volume in the maximum floating state is smaller than two times, a display controlling becomes difficult. On the other hand, if the apparent volume in the maximum floating state is larger than 12 times, a handling inconvenience during a liquid powders filling operation into the device such as a particle over-scattering occurs. That is, it is measured by filling the liquid powders in a transparent closed vessel through which the liquid powders are seen; vibrating or dropping the vessel itself to obtain a maximum floating state; and measuring an apparent volume at that time from outside of the vessel. Specifically, the liquid powders having a volume 1/5 of the vessel are filled as the liquid powders in a vessel with a polypropylene cap having a diameter (inner diameter) of 6 cm and a height of 10 cm (product name I-boy produced by As-one Co., Ltd.), the vessel is set in the vibrator, and a vibration wherein a distance of 6 cm is repeated at a speed of 3 reciprocating/sec. is performed for 3 hours. Then, the apparent volume in the maximum floating state is obtained from an apparent volume just after a vibration stop.

Moreover, according to the invention, it is preferred that a time change of the apparent volume of the liquid powders satisfies the following formula:

$$V_{10}/V_5 > 0.8;$$

here, $V_5$ indicates the apparent volume (cm$^3$) of the liquid powders after 5 minutes from the maximum floating state; and $V_{10}$ indicates the apparent volume (cm$^3$) of the liquid powders after 10 minutes from the maximum floating state. In this case, in the information display panel according to the invention, it is preferred to set the time change $V_{10}/V_5$ of the apparent volume of the liquid powders to larger than 0.85, more preferably larger than 0.9. If the time change $V_{10}/V_5$ is not larger than 0.8, the liquid powders are substantially equal to normal particles, and thus it is not possible to maintain a high speed response and durability according to the invention.

Moreover, it is preferred that the average particle diameter d(0.5) of the particle materials constituting the liquid powders is 0.1 - 20 $\mu$m, more preferably 0.5 - 15 $\mu$m, most preferably 0.9 - 8 $\mu$m. If the average particle diameter d(0.5) is less than 0.1 $\mu$m, a display controlling becomes difficult. On the other hand, if the average particle diameter d(0.5) is larger than 20 $\mu$m, a display clearness becomes deteriorated. Here, the average particle diameter d(0.5) of the particle materials constituting the liquid powders is equal to d(0.5) in the following particle diameter distribution Span.

It is preferred that particle diameter distribution Span of the particle material constituting the liquid powders, which is defined by the following formula, is less than 5 preferably less than 3:

$$\text{Particle diameter distribution: Span} = (d(0.9) - d(0.1))/d(0.5) ;$$

here, d(0.5) means a value of the particle diameter expressed by $\mu$m wherein an amount of the particle material constituting the liquid powders having the particle diameter larger than this value is 50% and an amount of the particle material constituting the liquid powders having the particle diameter expressed by $\mu$m wherein an amount of the particle material constituting the liquid powders having a particle diameter smaller than this value is 10%, and d(0.9) means a value of the particle diameter expressed by $\mu$m wherein an amount of the particle material constituting the liquid powders having the particle diameter smaller than this value is 90%. If the particle diameter distribution Span of the particle materials constituting the liquid powders is set to not more than 5, the particle diameter becomes even and it is possible to perform an even liquid powders movement.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution.

In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

The liquid powders may be formed by mixing necessary resin, charge control agent, coloring agent, additive and so on and crushing them, or, by polymerizing from monomer, or, by coating a particle with resin, charge control agent, coloring agent, and additive and so on. Hereinafter, typical examples of resin, charge control agent, coloring agent, additive and so on constituting the liquid powders will be explained.

Typical examples of the resin include urethane resin, acrylic resin, polyester resin, modified acryl urethane resin, silicone resin, nylon resin, epoxy resin, styrene resin, butyral resin, vinylidene chloride resin, melamine resin, phenolic resin, fluorocarbon polymers, and it is possible to combine two or more resins. For the purpose of controlling the attaching force with the substrate, acryl urethane resin, acryl urethane silicone resin, acryl urethane fluorocarbon polymers, urethane resin, fluorocarbon polymers are preferred.

Examples of the charge control agent include, positive charge control agent including the fourth grade ammonium salt compound, nigrosine dye, triphenylmethane compound, imidazole derivatives, and so on, and negative charge control agent such as metal containing azo dye, salicylic acid metal complex, nitroimidazole derivative and so on.

As for a coloring agent, various kinds and colors of organic or inorganic pigments or dye are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hansa yellow G, hansa yellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7, Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent.

Further, in the present invention, it is important to control a gas in a gap surrounding the particles and liquid powders between the substrates, and a suitable gas control contributes an improvement of display stability. Specifically, it is important to control a humidity of the gap gas to not more than 60% RH at 25°C, preferably not more than 50% RH, more preferably not more than 35% RH.

The above gap means a gas portion surrounding the display media obtained by substituting the electrodes 5, 6, an occupied portion of the display media 3, an occupied portion of the partition walls 4 and a seal portion of the device from the space between the substrate 1 and the substrate 2 for example in Fig. 1 - Fig. 3.

A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the device so as to maintain the humidity mentioned above. For example, it is important to perform the operations of filling the particles or liquid powders and assembling the substrate under an atmosphere having a predetermined humidity and to apply a seal member and a seal method for preventing a humidity inclusion from outside of the device.

In the information display panel according to the invention, an interval between the substrates is not restricted if the display media can be moved and a contrast can be maintained, and it is adjusted normally to 10 - 500 $\mu$m, preferably 10 - 200 $\mu$m.

Moreover, it is preferred to control a volume occupied rate of the display media in a space between the opposed substrates to 5 - 70 vol %, more preferably 5 - 60 vol %. If the volume occupied rate of the particles or the liquid powders exceeds 70 vol %, the display media become difficult to move, and if it is less than 5 vol %, a sufficient contrast cannot be obtained and a clear image display is not performed.

EXAMPLES

Hereinafter, actual examples will be explained.

The information display panel was manufactured in the manner mentioned below and the driving voltage was compared. An electrode pattern was formed on a surface of the front substrate and the rear substrate by means of a photolithography method so as to arrange the front electrode and the rear electrode. The electrode width was 170 $\mu$m.

Specifically, a positive type photoresist for g-line (OFPR-800 produced by TOKYO OHKA KOGYO CO., LTD.) was coated on an ITO film surface of a glass substrate with ITO having a sheet resistance 30 $\Omega$/sq by means of a spin coater (rotating condition of spin coater: 500 rpm x 3 minutes, 2000 rpm x 30 minutes). After coated, a pre-bake was performed by means of a clean oven at 90 °C for 20 minutes so as to remove solvents of the resist film.

A mask made of chromium, to which a desired electrode shape and the electrode chipping portion were arranged, was set on a film surface of the glass substrate with ITO, to which the resist film was formed, with a space of 50 $\mu$m, and an exposure was performed in such a manner that an amount of g-line exposure by means of a high-pressure mercury lamp was 200 mJ/cm$^2$. After the exposure, the substrate was immersed into a developer (NMD-3 produced by TOKYO OHKA KOGYO CO., LTD.) at 25 °C for 30 minutes, and then it was washed by water so as to develop the resist film, so that the resist film, which was patterned in a desired shape, could be obtained.

The glass substrate with ITO having the patterned resist film was immersed into ITO etching solution (weight ratio $H_2O$:HCl:HNO$_3$ = 1:1:0.16) at 40 °C for 110 seconds, and then it was washed by water so as to etch the ITO at which no resist film was arranged, so that the ITO film was patterned to the display electrode shape having the electrode chipping portion.

Finally, in order to remove residual resist film, the substrate was immersed into solvent (N methyl pyrrolidone) at 25 °C for 120 seconds, so that the glass substrate, to which the ITO display electrode having a desired patterned electrode chipping portion was arranged, could be obtained.

In the glass substrate, to which the ITO display electrode manufactured in the manner mentioned above was arranged, as an example according to the invention, five electrode chipping portions each having 10 $\mu$m square shape aligned in an electrode width direction with a space of 20 $\mu$m were arranged repeatedly in a longitudinal direction with an interval of 20 $\mu$m to the front electrode and the rear electrode respectively. The center position of the electrode chipping portion arranged repeatedly to the rear electrode and the center position of the electrode chipping portion arranged repeatedly to the front electrode were arranged in such a manner that they were shifter by 15 $\mu$m in a width direction and by 15 $\mu$m in a longitudinal direction on a projected plane when stacking. As a known example, the thus prepared front electrode and rear electrode were used as they were. Then, the partition wall was formed on the front substrate, and predetermined amounts of two groups: white/black of particles or liquid powders were filled in a cell formed by the partition wall. Then, the particles or the liquid powders remained on the partition wall were removed, and an adhesion layer was arranged on the partition wall. After that, the rear substrate and the front substrate were adhered by the rear substrate with respect to the front substrate, so that the information display panels according to the example of the present invention and the known example were obtained.

With respect to the thus obtained information display panels according to the example of the invention and the known example, the driving voltage was measured at three conditions of VD10, VD50 and VD90. Here, a method of measuring the driving voltage was as follows. At first, a voltage was applied to the electrodes in such a manner that almost all of a display region of the electrode surface at the front substrate side was covered with the white color display media so as to perform an initialization. Then, from the initialization condition, the electrode of the rear substrate was grounded to be 0 potential, and a voltage having a direction of electrostatic field, which moved the black color display media to the electrode surface of the front substrate, was gradually applied to the electrode of the front substrate in such a manner that an absolute value became larger gradually. At every step during the absolute value increasing, an optical density was measured from the front substrate side by means of "GRETAG MACBETH portable reflection densitometer RD-19 produced by SAKATA INX CORPORATION".

Here, an absolute value of the applied voltage was 0 - 150V. When the absolute value of 150V was applied, almost all of the display region at the front substrate side was covered with the black color display media, and this condition was assumed to be a final condition. Under the condition such that an optical density at the initialization condition was assumed to be 0 and an optical density at the final condition was assumed to be 100, the optical density at every applied voltage was normalized and the normalized density was measured. The driving voltage VD10 means an absolute value of the applied voltage at which the normalized density was 10; the driving voltage VD50 means an absolute value of the applied voltage at which the normalized density was 50; and the driving voltage VD90 means an absolute value of the applied voltage at which the normalized density was 90. The results of the information display panel utilizing the particles were shown in Table 1, and the results of the information display panel utilizing the liquid powders were shown in Table 2.

[Table 1]

|  | VD10 driving voltage (V) | VD50 driving voltage (V) | VD90 driving voltage (V) |
|---|---|---|---|
| Example of the pr esent invention (chipping exists) | 40 | 50 | 80 |
| Known example (no chipping) | 70 | 85 | 115 |

[Table 2]

|  | VD10 driving voltage (V) | VD50 driving voltage (V) | VD90 driving voltage (V) |
|---|---|---|---|
| Example of the pr esent invention (chipping exists) | 30 | 40 | 70 |
| Known example (no chipping) | 60 | 75 | 105 |

From the results shown in Table 1 and Table 2, it is understood that, at any conditions of VD10, VD50 and VD90, the information display penal according to the example of the invention can be driven at a low voltage as compared with the information display panel according to the known example.

INDUSTRIALLY APPLICABILITY

The image display panel according to the invention is applicable to the image display unit for mobile equipment such as notebook personal computers, PDAs, cellular phones, handy terminal and so on; to the electric paper for electric book, electric newspaper and so on; to the bulletin boards such as signboards, posters, blackboards and so on; to the image display unit for electric calculator, home electric application products, auto supplies and so on; to the card display unit for point card, IC card and so on; and to the display unit for electric POP, electric advertisement, electric price tag, electric shelf tag, electric musical score, RF-ID device and so on.

**Claims**

1. An information display panel, in which particles or liquid powders are sealed between two substrates having paired electrodes, at least one substrate being transparent, and, in which the display media, to which an electrostatic field is applied, are made to move so as to display information such as an image, **characterized in that** an electrode chipping portion is arranged to one of or both of the paired electrodes.

2. The information display panel according to claim 1, wherein the electrode chipping portion is formed by a plurality of chipping portions each having a closed curve shape and has a size of 1% - 300% with respect to a projected area calculated from an average particle diameter of the particles constituting the display media.

3. The information display panel according to claim 1 or 2, wherein, in the case that the electrode chipping portion is arranged to both of the electrodes, respective center positions of the electrode chipping portion arranged to one electrode and the electrode chipping portion arranged to the other electrode are not located at the same position in a projected plane.

4. The information display panel according to claim 1, wherein the electrode chipping portion is formed by a plurality of chipping portions each having a straight line shape, and a width thereof is 1% - 150% of an average particle diameter d(0.5) of the particles constituting the display media.

5. The information display panel according to claim 4, wherein, in the case that the electrode chipping portion is arranged to both of the electrodes, an overlapped portion on a projected plane of the electrode chipping portion arranged to one electrode and the electrode chipping portion arranged to the other electrode is included in a circle calculated from an average particle diameter d(0.5) of the particles constituting the display media.

6. The information display panel according to one of claims 1 - 5, wherein a sum of area Sk of the electrode chipping portion is 0.01<Sk/S<0.8 with respect to an electrode area of a display portion.

# FIG. 1

(a)

(b)

2
3B
3
3W

1

2    3B

4

1    3W

2
3W

3B

1

2    3W

4

1    3B

# FIG. 2

# FIG. 3

(a)                                                (b)

# *FIG. 4*

(a)

(b)

*FIG. 5*

*FIG. 6*

## FIG. 7

## FIG. 8

# FIG. 9

# FIG. 10

*FIG. 11*

*FIG. 12*

*FIG. 13*

5

11

31

41

*FIG. 14*

5

11

41

# FIG. 15

FIG. 16

## INTERNATIONAL SEARCH REPORT

| International application No. |
| --- |
| PCT/JP2005/006282 |

A. CLASSIFICATION OF SUBJECT MATTER
Int.Cl$^7$  G02F1/167, 1/17, G09F9/37

According to International Patent Classification (IPC) or to both national classification and IPC

B. FIELDS SEARCHED

Minimum documentation searched (classification system followed by classification symbols)
Int.Cl$^7$  G02F1/167, 1/17, G09F9/37

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2004-4479 A  (Bridgestone Corp.),<br>08 January, 2004 (08.01.04),<br>Par. Nos. [0010] to [0014], [0027], [0042];<br>table 1; Fig. 2<br>(Family: none) | 1,2,6<br>4<br>3,5 |
| Y<br>A | JP 2003-98556 A  (Stanley Electric Co., Ltd.),<br>03 April, 2003 (03.04.03),<br>Par. Nos. [0019] to [0035]; Figs. 6, 8, 10,<br>11, 13<br>(Family: none) | 1,3<br>2,4-6 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>09 June, 2005 (09.06.05) | Date of mailing of the international search report<br>28 June, 2005 (28.06.05) |
| --- | --- |
| Name and mailing address of the ISA/<br>Japanese Patent Office | Authorized officer |
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Japan Hardcopy '99. *The Imaging Society of Japan,* 21 July 1999, 249-252